# EUROPEAN PATENT SPECIFICATION

(11) **EP 2 200 815 B1**
(45) Date of publication and mention of the grant of the patent: **07.11.2012**
(21) Application number: 07858838.1
(22) Date of filing: 10.09.2007
(51) Int. Cl.: B29D 30/16

(54) **Process for manufacturing a reinforcing structure for vehicle tyres**
Verfahren zur Herstellung einer Verstärkungsstruktur für Fahrzeugreifen
Procédé de fabrication d'une structure de renforcement pour pneus de véhicules

(43) Date of publication of application: 30.06.2010
(73) Proprietor: Pirelli Tyre S.P.A., 20126 Milano (IT)
(72) Inventor: CANTU', Marco, I-20126 Milano (IT); MARCHINI, Maurizio, I-20126 Milano (IT); MARIANI, Fiorenzo, I-20046 Biassono (IT)
(74) Representative: Fabiano, Piero
(86) International application number: PCT/IB2007/002577
(87) International publication number: WO 2009/034400

(56) References cited:
- WO-A-03/045714
- WO-A-2004/022322
- JP-A- 2003 251 711

## Description

The present invention relates to a process for manufacturing a reinforcing structure for vehicle tyres. In particular, the reinforcing structure is obtained through application of strip-like elements in mutually approached relationship along the circumferential extension of a toroidal support so as to form at least one reinforcing layer having a circumferential extension around a geometric rotation axis.

A tyre for vehicle wheels usually comprises a carcass structure essentially made up of one or more carcass plies shaped into a substantially toroidal conformation and having their axially opposite side edges in engagement with respective annular reinforcing structures incorporating circular metal inserts, usually referred to as "bead cores". Each annular reinforcing structure is embedded in a so-called "bead" defined along an inner circumferential edge of the tyre for anchoring of the latter to a corresponding mounting rim.

Applied to the carcass structure, at a radially external position, is a belt structure comprising one or more belt layers in the form of a closed ring and essentially made up of textile or metallic cords suitably oriented with respect to each other and to the cords belonging to the adjacent carcass plies.

Also applied at a radially external position to the belt structure is a tread band, usually consisting of a strip of elastomeric material of suitable thickness. It is to be pointed out, to the aims of the present specification, that by the term "elastomeric material" it is intended a composition comprising at least one elastomeric polymer and at least one reinforcing filler. Preferably, this composition also comprises additives such as cross-linking agents and/or plasticizers, for example. Due to the presence of the cross-linking agents, this material can be cross-linked through heating so as to form the final article of manufacture.

A pair of sidewalls is applied onto the opposite sides of the tyre, each of which covers a side portion of the tyre included between a so-called shoulder region, located close to the corresponding side edge of the tread band, and the corresponding bead.

Recently, particular attention has been paid to the research of new production methods in which manufacture of intermediate semifinished products for tyre building can be eliminated or at least limited. For instance, in European patent EP0928680, in the name of the same Applicant, it is disclosed a method of manufacturing tyres in which the carcass ply or plies as well as each of the belt layers are obtained by laying a plurality of strip-like segments upon each other in circumferentially approached relationship, on a toroidal support the shape of which corresponds to the inner conformation of the tyre to be obtained.

In document US6355126 it is disclosed a method and an apparatus according to which a belt layer is formed through laying of strip-like elements cut out from a continuous strip-like element. Each strip-like element or segment once cut from the continuous strip-like element, is picked up by gripping members of the magnetic type or embodied by suction cups, operated by one or more robotized arms. The gripping members retain the strip-like element at the opposite ends thereof, and possibly also at a central portion, and are moved upon command of the robotized arms to cause application of the strip-like element itself onto the outer surface of a toroidal support, following a predetermined angle relative to the circumferential extension of the support. When application has been completed, the toroidal support is rotated around its geometric axis through a predetermined angle, to enable application of a new strip-like segment adjacent to the one previously applied. Sequential repetition of the above described steps gives rise to formation of a belt layer extending over the whole circumferential extension of the toroidal support.

In document WO01/38077 in the name of the same Applicant it is described another method and apparatus for making a belt layer for vehicle tyres, through laying of strip-like elements cut out from a continuous strip-like element. In detail, the strip-like elements thus cut are applied in mutually approached relationship along the circumferential extension of a toroidal support so as to form at least one reinforcing layer of a circumferential endless extension around a geometric rotation axis (X-X') of the toroidal support. During this application, a relative angular rotation around a correction axis substantially radial to the geometric rotation axis of the toroidal support is determined between the strip-like element itself and the toroidal support.

Document WO2004/022322 discloses a method and apparatus for manufacturing elastomeric material components of a tyre for vehicle wheels, said method comprising the steps of: feeding a continuous elongated element from a delivery member disposed close to a toroidal support for application of said elongated element onto the toroidal support itself; giving the toroidal support a rotatory motion for circumferential distribution around its geometrical rotation axis (X), so that the elongated element is circumferentially distributed on the toroidal support; moving said toroidal support on a plurality of axes so as to carry out controlled relative displacements for transverse distribution between said toroidal support and said delivery member to form a component of a tyre with said elongated element which is defined by a plurality of coils laid down in mutual side by side and superposed relationship in a preestablished deposition pattern depending on a predetermined cross-section outline to be given to said component, wherein the step of feeding said continuous elongated element takes place by extrusion of elastomer material through at least one extrusion screw and at least one gear pump (23) associated therewith.

Document WO03/045714 discloses a process for manufacturing a reinforcing structure for vehicle tyres wherein, a belt structure is formed by means of band-like portions each comprising parallel cords incorporated in an elastomer layer and sequentially laid in a mutually circumferentially adjacent arrangement on a toroidal support.The band-like portions are applied with at least one of the smaller sides circumferentially non-aligned with the corresponding smaller side of at least one of the circumferentially adjacent band-like portions, so that said cords in the side zones of the belt structure of the radial tyre thus obtained have a non-uniform density.

Document JP 2003251711 discloses an apparatus for molding the belt of the tire comprises a roller mechanism for drawing and conveying a strip material from a roll in which the narrow strip material is wound, a cutter for cutting the drawn material to strip pieces corresponding to a tire width, a transfer means for sucking the pieces to transfer the pieces to a molding drum, and a control means for controlling the means and the drum so as to sequentially adhere the pieces along the circumference of the drum at a predetermined pitch in a predetermined direction.

As compared with tyres for four-wheeled vehicles, quite peculiar performance involving many structural differences is required from tyres for two-wheeled vehicles. The most important differences result from the fact that when a motorcycle is running on a bend it must reach a much greater inclination than when it runs on a straight stretch, thus forming an angle with the perpendicular to the ground, (termed "camber angle") that may reach 45°, or even 65° under very hard running conditions. Therefore, when a motorcycle gets over a bend, the contact area of the tyre progressively moves from the central region to the axially outermost region of the tread in the direction of the bend centre. For this reason tyres for two-wheeled vehicles are distinguishable due to their marked transverse curvature. This transverse curvature is usually defined by the particular value of the ratio of the distance between the radially outermost point of the tread and the line passing through the laterally opposite ends of the tread itself, to the distance measured along the tyre chord between these two ends. In tyres for two-wheeled vehicles, the value of the curvature ratio is generally at least as high as 0.15 and usually in the order of about 0.3 in the case of rear tyres, and even higher, until about 0.45 in the case of front tyres, as compared with a value usually in the order of about 0.05 in tyres for cars.

Presently, tyres for two-wheeled vehicles usually have a radial carcass structure associated with a belt structure that can comprise one or more belt layers in the form of a closed ring, essentially made up of textile or metallic cords suitably oriented relative to the cords belonging to the carcass structure.

In particular, the belt structure can be formed with one or more continuous cords wound up into coils disposed axially close to each other and substantially parallel to the circumferential extension direction of the tyre itself (the so-called "zero-degree belt"). Alternatively, the belt structure can consist of two radially superposed layers, each consisting of elastomeric material reinforced with cords disposed parallel to each other, said layers being such disposed that the cords of the first belt layer are obliquely oriented relative to the equatorial plane of the tyre, while the cords of the second layer have an oblique orientation as well, but symmetrically crossed relative to the cords of the first layer (the so-called "crossed belt").

The Applicant has ascertained that laying of strip-like elements on a toroidal support for manufacturing a so-called crossed belt according to the teachings of the known art, appears to be generally of difficult accomplishment, particularly when tyres for motorcycles are concerned, due to the high curvature of these tyres.

In fact, the Applicant has noticed that in the laying apparatus according to application WO01/38077, a precise control on laying of the ends of the strip-like element appears to be rather difficult. This could involve a loss of accuracy in following the predetermined laying trajectory and an insufficient adhesion of the end tips of the strip-like element.

The Applicant has further noticed that according to said application WO01/38077, a control on laying of strip-like elements of the textile type is particularly critical. In fact said strip-like elements due to their own nature easily tend to flex and bend upon themselves.

In addition, the Applicant could see that in laying processes of strip-like elements in accordance with the known art a contact between the element exerting the laying pressure and the support drum is impossible to be maintained over the whole width of the presser element, along the whole laying profile, above all when the profiles of the toroidal support have a high curvature, exactly like the toroidal supports for motorcycle tyres.

This lack of contact can give rise in this case as well to an insufficient adhesion of the strip-like element, above all at the ends thereof.

The Applicant has now found that it is possible to ensure a high structural uniformity in a reinforcing structure obtained through sequential laying of strip-like elements, by making the toroidal support cover a predetermined three-dimension path so as to cause adhesion of the strip-like element to the toroidal support along a longitudinal extension line of the strip-like element that is coincident with a predetermined laying trajectory.

The Applicant has further found that during application of the strip-like element to the outer surface of the toroidal support it is possible to ensure a contact according to both the radial and circumferential curvature of the support at any contact region and over the whole laying trajectory.

In an aspect, the invention relates to a process for manufacturing a reinforcing structure for vehicle tyres, comprising:
- preparing strip-like elements each comprising longitudinal thread elements disposed parallel to each other and at least partly coated with at least one layer of elastomeric material;
- applying the strip-like elements in mutually approached relationship along the circumferential extension of a toroidal support, according to a predetermined laying trajectory identified on the toroidal support itself, so as to form at least one reinforcing layer having a circumferential extension around a geometric rotation axis (X-X'), said toroidal support (3) comprising a curvature ratio included in the range of 0.2 to 0.8, said application of each strip-like element comprises moving the toroidal support according to a predetermined three-dimension path so as to make each of said strip-like elements adhere to the outer surface of said toroidal support following a longitudinal extension line of the strip-like element that is coincident with the predetermined laying trajectory.

Particular embodiments of the invention are the subject of the dependent claims.

It is preferably further provided that movement of the toroidal support be controlled during application of each strip-like element, to cause application of the strip-like element itself according to a loxodromic trajectory.

In the present specification, "loxodromic trajectory" is intended a trajectory keeping the laying angle constant relative to the meridian planes of the toroidal support.

In case of need, movement of the toroidal support may be advantageously provided to take place by a robotized arm of the anthropomorphic type.

Alternatively, movement of the toroidal support during application of each strip-like element is such controlled as to determine application of the strip-like element itself in such a manner that the angles of the laying trajectory of said strip-like element on the outer surface of the toroidal support will be varied relative to the meridian planes.

It is also preferably provided that application of each strip-like element involves the steps of:
a) bringing the toroidal support into contact with a first end of the strip-like element coming out of a delivery device;
b) moving the toroidal support so as to cause said laying trajectory to be coincident with said longitudinal extension line of the strip-like element, while substantially maintaining the contact position between toroidal support and strip-like element fixed in space;
c) rotating the toroidal support through a predetermined angular pitch;
d) repeating steps a) to c).

Preferably, the predetermined angular pitch is correlated with the circumferential distribution pitch of the strip-like elements.

Alternatively, in another preferred embodiment of the present invention, application of each strip-like element involves the steps of:
a) providing the strip-like element on a support place according to a substantially straight line;
b) bringing said toroidal support into contact with an end of the strip-like element;
c) moving the toroidal support in such a manner as to cause said laying trajectory to be coincident with a longitudinal extension line of the strip-like element;
d) rotating the toroidal support through a predetermined angular pitch;
e) repeating steps a) to d).

Preferably, the predetermined angular pitch is correlated with the circumferential distribution pitch of the strip-like elements.

This description will be set out hereinafter with reference to the accompanying drawings, given by way of non-limiting example, in which:
- Fig. 1 diagrammatically shows a step of the process according to the present invention in which the toroidal support has been only just put into contact with a first end of the strip-like element to be applied to its outer surface;
- Fig. 2 shows a subsequent step of the process of the invention at a different angle, in which the toroidal support goes on moving to enable adhesion of the strip-like element to its outer surface following a predetermined laying trajectory;
- Fig. 3 shows a further step of the process of the invention at a different angle, in which the toroidal support has almost finished its movement to enable adhesion of the strip-like element on its outer surface, the strip-like element being almost completely laid on the outer surface of the support;
- Fig. 4 diagrammatically shows a step of an alternative embodiment of the process according to the present invention in which the toroidal support has been only just put into contact with a first end of the strip-like element to be applied to its outer surface, the strip-like element being laid on a rest plane;
- Fig. 5 shows a subsequent step of the process of the present invention in which the toroidal support goes on its movement to enable adhesion of the strip-like element to its outer surface;
- Fig. 6 shows a final application step of the strip-like element; and
- Fig. 7 shows a half cross-section of a tyre for motorcycles manufactured following the process of the present invention.

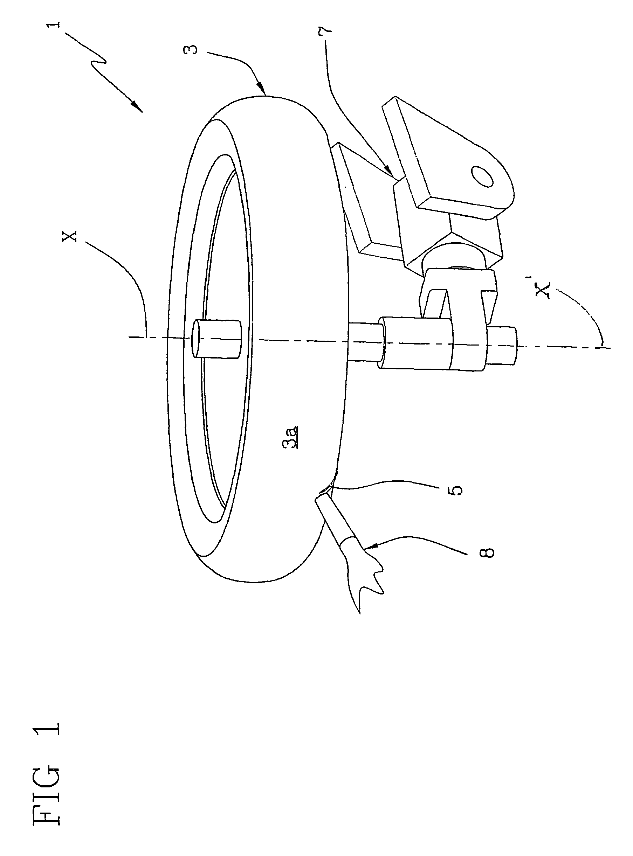

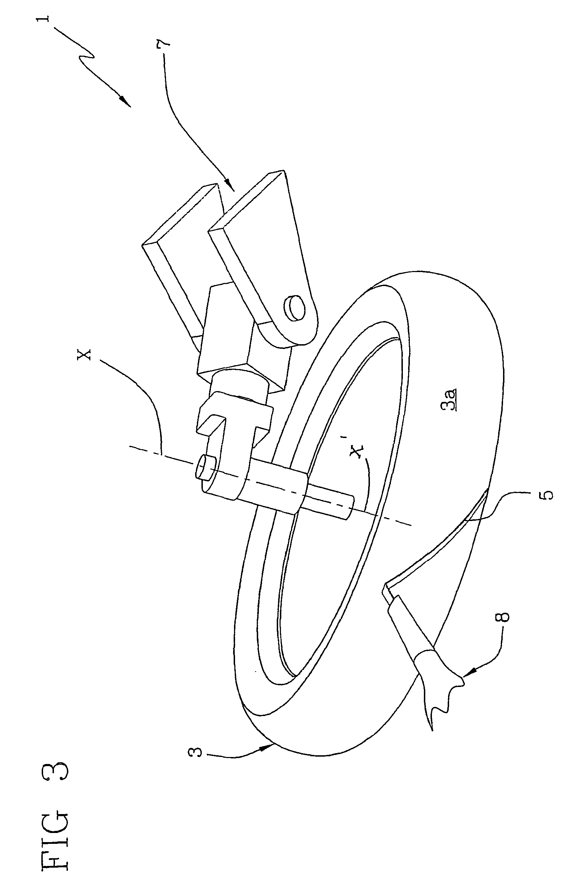

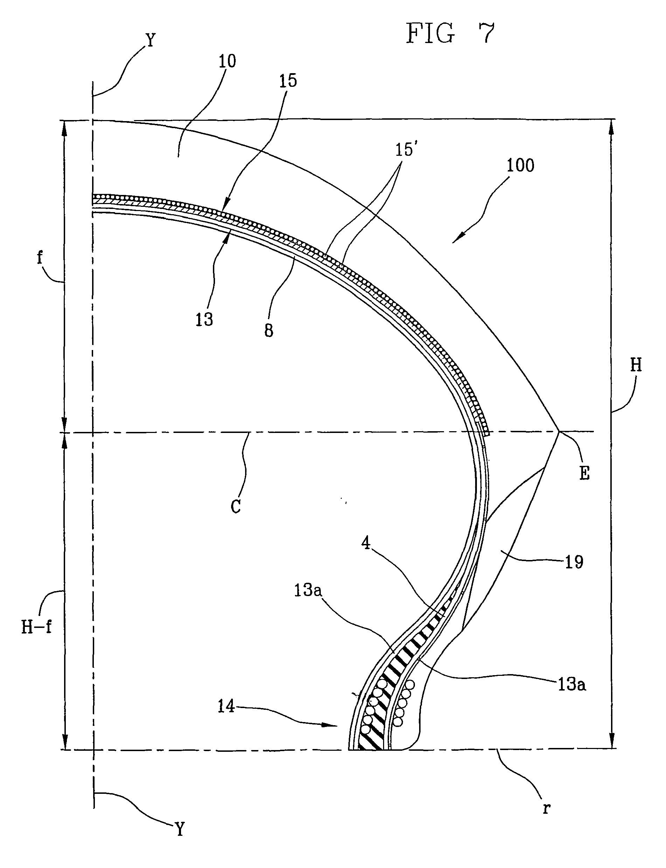

Diagrammatically shown in Figs. 1 and 3 are some steps of the process for manufacturing a tyre for vehicles and in particular a tyre 100 for motorcycles provided with a belt structure 15. With reference to Fig. 7, said tyre comprises a carcass structure 13 provided with at least one carcass ply 13a, substantially shaped into a substantially toroidal configuration and engaged, by its opposite circumferential edges, to at least one annular reinforcing structure, so as to form a structure usually termed "bead" 14.

Circumferentially applied to the carcass structure 13, at a radially external position, is a belt structure 15 on which a tread band 18 is circumferentially superposed. Formed in said tread band, following a moulding operation carried out concurrently with tyre vulcanisation, are longitudinal and transverse grooves such disposed as to define a desired "tread pattern". In known manner, the tyre also comprises a pair of sidewalls 19 laterally applied to the carcass structure 13, on opposite sides. The process in accordance with the present invention is particularly adapted to make a belt structure of a tyre 100 having a cross section (Fig. 7) marked by a high transverse curvature; in more detail, said tyre has a section height H that is measured between the centre of the tread band and the fitting diameter, identified by the reference line r, passing through the tyre beads.

In addition, tyre 100 has a width C that is defined by the distance between the laterally opposite ends E of the tread band and a curvature that is defined by the particular value of the ratio between the distance f of the tread centre from the line passing through the ends E of the tread itself and width C.

Preferably the invention applies to tyres having a curvature ratio f/C greater than 0.2 and preferably greater than 0.28. This curvature ratio f/C is at all events smaller than 0.8 and preferably smaller than 0.5.

Preferably, the invention applies to tyres with particularly low sidewalls (Fig. 7). In other words the ratio (H-f)/H for these tyres is less than 0.7 and more preferably less than 0.5.

In the embodiment described, a belt structure for motorcycles is made on a toroidal support 3 having an outer surface 3a substantially shaped according to the inner configuration of the tyre to be obtained.

The process in accordance with the example shown is put into practice by an apparatus 1 comprising, in addition to said support 3, at least one robotized arm 7 of the anthropomorphic type for movement of support 3; and at least one device 8 adapted to deliver strip-like elements 5 each comprising longitudinal thread elements disposed parallel to each other and at least partly coated with at least one layer of elastomeric material.

In the present specification and in the claims, "strip-like element" means a portion of a ribbon-like element comprising longitudinal cords disposed parallel to each other and at least partly coated with at least one layer of elastomeric material, having one size (length) prevailing on the two others (width, thickness). In particular, the strip-like elements preferably have a width included between 5 mm and 25 mm.

Preferably, the strip-like elements also have a thickness included between 0.5 mm and 2 mm.

Still preferably, the strip-like elements contain a number of cords included between 4 and 40 and have a density preferably included between 60 and 130 cords/decimetre.

By "robotized arm of the anthropomorphic type" it is instead intended a mechanical arm provided with six degrees of freedom.

It is further pointed out already now that the process in accordance with the invention can also be used to make any other reinforcing structure comprising cords oriented parallel to each other and with a predetermined angle relative to an equatorial plane of the tyre. The delivery device 8 can be made in any convenient manner by a person skilled in the art and for this reason it will not be further described.

In addition, it is also pointed out that preferably, before carrying out manufacture of the belt structure, a carcass structure (not shown in the drawings) is applied onto the toroidal support 3, which carcass structure can be conveniently formed on the toroidal support 3 itself following the description contained in anyone of patents EP0943421, EP0928680, EP0976535, EP01124699, all in the name of the same Applicant.

Alternatively, the carcass structure could be made separately and coupled, during the shaping step, to the belt structure that is instead made on the toroidal support.

In this case, the carcass structure is first made in the form of a cylindrical sleeve on a cylindrical drum and subsequently shaped, by expansion, on the same drum or, after transfer, on a second drum (called building drum).

According to another embodiment, the belt structure could be made directly on the carcass structure, suitably stiffened after shaping, that in this case would also perform the function of toroidal support.

Going back to the preferred embodiment shown in the figures, it is pointed out that the toroidal support 3 will not be described in detail as it can be made in any convenient manner by a person skilled in the art; by way of example, it could consist of a dismountable or collapsible metal drum to facilitate subsequent removal of same from the obtained tyre.

As shown in Fig. 1, to carry out the process in accordance with the present invention, the robotized arm 7 is disposed so as to place the toroidal support 3 and in particular the outer surface 3a of the latter in contact with a first end of the strip-like element 5 coming out of the delivery device 8. In particular, the toroidal support 3 is such positioned that contact with the end of the strip-like element 5 takes place at a given point of its outer surface 3a, preferably a shoulder point, and at a predetermined angle relative to the equatorial plane of the support itself.

At this point, to make the strip-like element adhere to the toroidal support 3, the latter goes on being moved in space, still by means of the robotized arm 7, according to a three-dimension path so as to cause the predetermined laying trajectory identified on the outer surface 3a itself of support 3, to be coincident with the median line of the strip-like element 5.

During this step in which the strip-like element 5 adheres to the outer surface 3a of the toroidal support, movement of said support 3 leads the predetermined laying trajectory to be coincident with the median line of the strip-like element, starting from the shoulder of support 3, continuing on the crown and terminating at the remaining shoulder of support 3.

Movement of the toroidal support 3 is of such a nature that at the adhesion region between strip-like element 5 and toroidal support 3, the strip-like element keeps always tangent to the circumferential and radial curvature of the support 3 itself.

It is also preferably provided that movement of the toroidal support be controlled during application of each strip-like element, to cause application of the strip-like element itself according to a loxodromic trajectory.

Alternatively, movement of the toroidal support is controlled during application of each strip-like element, to determine application of the strip-like element in such a manner as to vary the angles of the laying trajectory of the strip-like element on the outer surface of the toroidal support relative to the meridian planes.

The predetermined laying trajectory identifies an angle greater than 14° with the meridian planes of the toroidal support.

The predetermined laying trajectory identifies an angle smaller than 30° with the meridian planes of the toroidal support.

The path of the toroidal support 3 is a spatially complex path advantageously obtained due to the six degrees of freedom of the robotized arm.

The robotized arm 7 in this case governs the laying trajectory of the strip-like element 5 by positioning the toroidal support 3 in a sequential but continuous manner relative to a fixed delivery point.

Laying of the strip-like element 5 on the outer surface 3a of the toroidal support 3 takes place while maintaining the contact position between toroidal support 3 and strip-like element 5 fixed in space.

During the applying step, the strip-like element 5 moves forward in the delivery device 8 being dragged along by the progressive movement of the toroidal support 3 itself. In fact, the adhesion force of the strip-like element 5 to the toroidal support is greater than the friction force between strip-like element 5 and delivery device 8.

When application of a strip-like element 5 has been completed, the robotized arm 7 prepares for application of the subsequent strip-like element by substantially rotating the toroidal support 3 through a predetermined angular pitch. This pitch is typically correlated with the circumferential distribution pitch of the strip-like elements 5.

The delivery device 8 can supply the strip-like elements 5 to be laid down, previously cut, in a sequential manner. Preparation of the strip-like elements 5 is carried out by cutting actions executed on at least one continuous strip-like element not shown in the figures, incorporating the thread elements into the layer of elastomeric material. In addition, it is pointed out that each cutting action is followed by application of each individual strip-like element 5 thus obtained onto the toroidal support 3. During the applying step, a new strip-like element 5 is being cut.

The previously described steps are repeated until completion of at least one reinforcing layer having circumferential extension around a geometric rotation axis of the toroidal support 3.

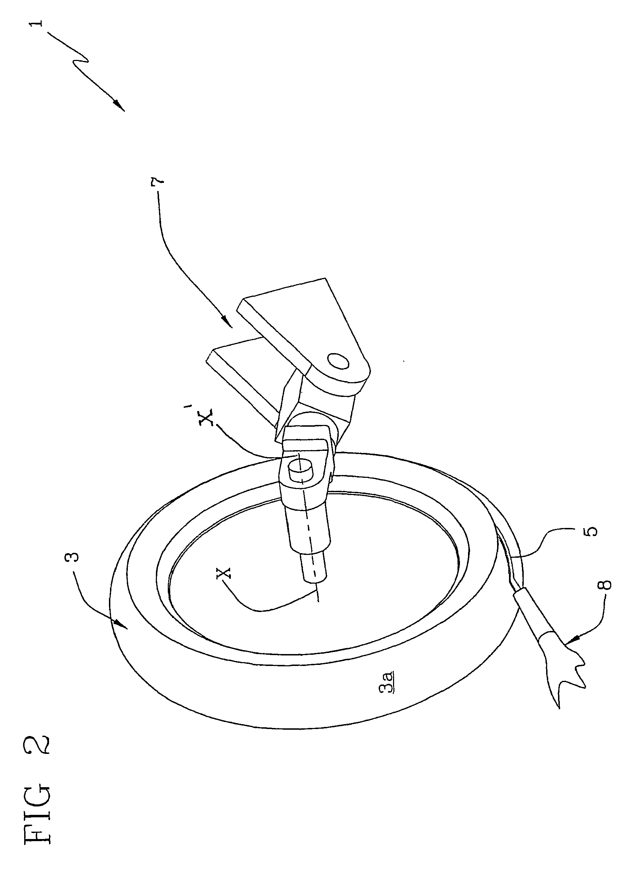

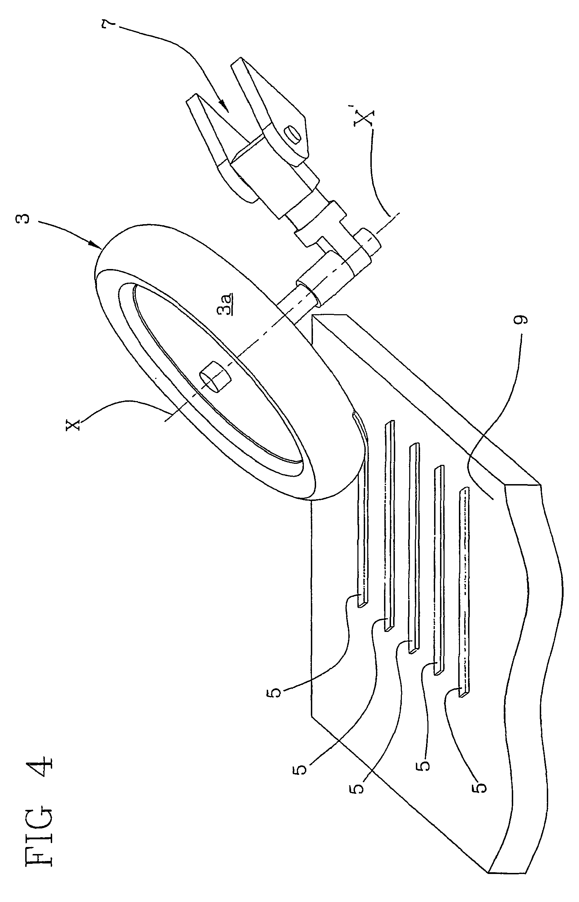

Shown in Figs. 4, 5, 6 is a second embodiment of the process in accordance with the present invention, substantially similar to the embodiment shown in Figs. 1 to 3, except for the fact that each strip-like element 5 to be applied onto the toroidal support 3 is not directly applied on its coming out of the delivery device 8 but, once supplied by said device, as better shown in Fig. 4, is disposed on a rest plane according to a substantially straight line. At this point, the robotized arm 7 acts to bring the toroidal support 3, at a predetermined point of its outer surface 3a, preferably the shoulder, and according to a predetermined angle of the equatorial plane of the toroidal support relative to the perpendicular of the rest plane 9, into contact with one end of the strip-like element 5 lying in said plane 9.

The action of the robotized arm moves the toroidal support 3 so as to lead the laying trajectory identified on the outer surface 3a of the toroidal support 3, to be coincident with the median line of the strip-like element 5.

According to this embodiment, during this movement the contact position between the toroidal support 3 and strip-like element 5 is varied along the rest plane.

In other words, the toroidal support 3 rolls on the rest plane varying the angle of its equatorial plane relative to the perpendicular of the rest plane 9 so as to make the laying trajectory be coincident with the median line of the strip-like element 5.

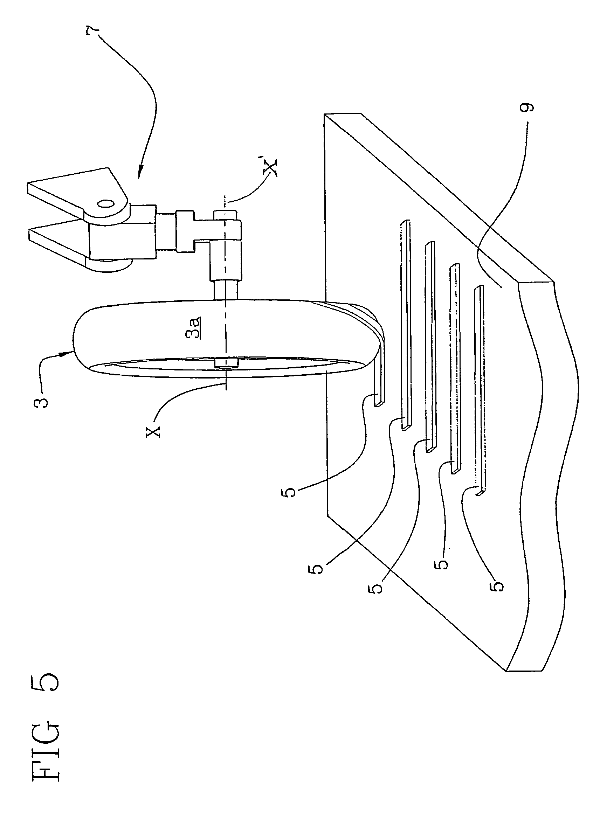

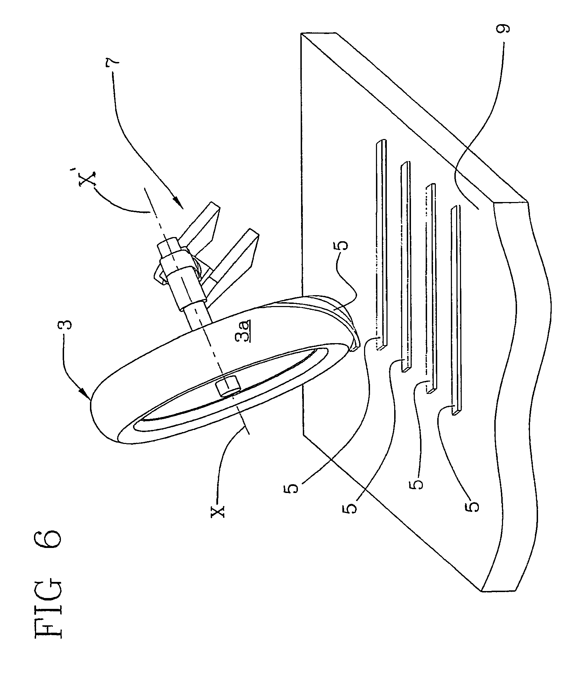

In particular, movement of the support takes place in such a manner that initially a point of the shoulder of the toroidal support 3 is coincident with one end of the strip-like element 5 to be applied (Fig. 4), then said movement goes on with application of the central portion of the strip-like element 5 at the crown of support 3 (Fig. 5) and terminates with application of the final end of the strip-like element 5 at the remaining shoulder of the support 3 (Fig. 6).

When application of the strip-like element 5 has been completed, the robotized arm gets ready for application of the subsequent strip-like element, by substantially rotating the toroidal support 3 through a predetermined angular pitch. This pitch is typically correlated with the circumferential distribution pitch of the strip-like elements 5.

Then the preceding steps are repeated until at least one reinforcing layer having a continuous circomferential extension around a geometric rotation axis of the toroidal support 3 has been completed.

As known, the reinforcing structure manufactured following the process of the present invention can contemplate several reinforcing layers 2 which are laid down according to different angles and can be made in the same manner as described above.

## Claims

1. A process for manufacturing a reinforcing structure for vehicle tyres, comprising:
- preparing strip-like elements (5), each comprising longitudinal thread elements disposed parallel to each other and at least partly coated with at least one layer of elastomeric material;
- applying the strip-like elements (5) in mutually approached relationship along the circumferential extension of a toroidal support (3), according to a predetermined laying trajectory identified on the toroidal support (3) itself, so as to form at least one reinforcing layer (2) having a continuous circumferential extension around a geometric rotation axis (X-X'), said toroidal support (3) comprising a curvature ratio included in the range of 0.2 to 0.8;
said application of each strip-like element (5) comprising moving the toroidal support (3) according to a predetermined three-dimension path so as to make each of said strip-like elements (5) adhere to the outer surface of said toroidal support (3) following a longitudinal extension line of the strip-like element (5) that is coincident with the predetermined laying trajectory.

2. A process as claimed in claim 1, wherein movement of said toroidal support (3) is controlled during application of each strip-like element (5), to cause application of the strip-like element itself according to a loxodromic trajectory relative to the outer surface of the toroidal support (3).

3. A process as claimed in claim 1, wherein preparation of said strip-like elements (5) is carried out by cutting actions sequentially conducted on at least one continuous strip-like element (6) incorporating said thread elements in said layer of elastomeric material.

4. A process as claimed in claim 3, wherein each cutting action is followed by application of the individual strip-like element (5) thus obtained onto the toroidal support (3).

5. A process as claimed in claim 1, wherein movement of said toroidal support takes place by means of a robotized arm (7) of the anthropomorphic type.

6. A process as claimed in claim 1, wherein application of each strip-like element (5) involves the steps of:
a) bringing said toroidal support (3) into contact with a first end of said strip-like element (5) coming out of a delivery device;
b) moving said toroidal support (3) so as to make said laying trajectory be coincident with said longitudinal extension line of the strip-like element (5), while maintaining the contact position between toroidal support (3) and strip-like element (5) substantially fixed in space;
c) rotating the toroidal support (3) through a predetermined angular pitch;
d) repeating steps a) to c).

7. A process as claimed in claim 6, wherein said predetermined angular pitch is correlated with the circumferential distribution pitch of the strip-like elements (5).

8. A process as claimed in claim 6, wherein during movement of the toroidal support (3) said strip-like element (5) moves forward in the delivery device (8) being dragged along by the movement itself of the toroidal support (3).

9. A process as claimed in claim 1, wherein application of each strip-like element (5) involves the steps of:
a) providing the strip-like element (5) on a rest plane according to a substantially straight line;
b) bringing said toroidal support (3) into contact with one end of said strip-like element (5);
c) moving said toroidal support (3) in such a manner as to make said laying trajectory be coincident with a longitudinal extension line of the strip-like element (5) ;
d) rotating the toroidal support (3) through a predetermined angular pitch;
e) repeating steps a) to d).

10. A process as claimed in claim 9, wherein said predetermined angular pitch is correlated with the circumferential distribution pitch of the strip-like elements (5).

11. A process as claimed in anyone of the preceding claims, wherein said predetermined laying trajectory identifies, with the meridian planes of the toroidal support (3), an angle always greater than 14°.

12. A process as claimed in anyone of the preceding claims, wherein said predetermined laying trajectory identifies, with the meridian planes of the toroidal support (3), an angle always smaller than 30°.

## Patentansprüche

1. Verfahren zum Herstellen einer Verstärkungsstruktur für Fahrzeugräder mit:
- dem Vorbereiten streifenähnlicher Elemente (5), die jeweils längs gerichtete Fadenelemente aufweisen, die parallel zueinander vorgesehen sind und die wenigstens teilweise mit wenigstens einer Schicht aus Elastomermaterial beschichtet sind;
- dem Aufbringen der streifenähnlichen Elemente (5) in einer zueinander angenäherten Beziehung entlang der Umfangserstreckung eines ringförmigen Lagers (3) gemäß einem vorbestimmten Ablageweg, der auf dem ringförmigen Lager (3) selbst identifiziert ist, so dass sie wenigstens eine Verstärkungsschicht (2) mit einer kontinuierlichen Umfangserstreckung um eine geometrische Drehachse (X-X') ausbilden, wobei das ringförmige Lager (3) ein Krümmungsverhältnis im Bereich von 0,2 bis 0,8 aufweist;
wobei das Aufbringen jedes streifenähnlichen Elements (5) ein Bewegen des ringförmigen Lagers (3) gemäß einem vorbestimmten dreidimensionalen Pfad aufweist, so dass jedes der streifenähnlichen Elemente (5) dazu gebracht wird, an der äußeren Oberfläche des ringförmigen Lagers (5) anzuhaften während es einer Längserstreckungslinie des streifenähnlichen Elements (5) folgt, die mit dem vorbestimmten Ablageweg übereinstimmt.

2. Verfahren nach Anspruch 1, bei dem die Bewegung des ringförmigen Lagers (3) während des Aufbringens jedes streifenähnlichen Elements (5) gesteuert wird, um ein Aufbringen des streifenähnlichen Elements selbst gemäß einem loxodromen Weg bezüglich der äußeren Oberfläche des ringförmigen Lagers zu verursachen.

3. Verfahren nach Anspruch 1, bei dem das Vorbereiten des streifenähnlichen Elements (5) durch Schneidebetätigungen ausgeführt wird, die sequentiell auf wenigstens einem kontinuierlichen streifenähnlichen Element (5) durchgeführt werden, das die Fadenelemente in der Schicht aus Elastomermaterial enthält.

4. Verfahren nach Anspruch 3, bei dem jede Schneidebetätigung durch ein Aufbringen des so erhaltenen individuellen streifenähnlichen Elements (5) auf das ringförmige Lager (3) gefolgt wird.

5. Verfahren nach Anspruch 1, bei dem die Bewegung des ringförmigen Lagers mittels eines Roboterarms (7) vom anthropomorphen Typ stattfindet.

6. Verfahren nach Anspruch 1, bei dem das Aufbringen jedes streifenähnlichen Elements (5) als Schritte aufweist:
a) in Kontakt Bringen des ringförmigen Lagers (3) mit einem ersten Ende des streifenähnlichen Elements (5), das aus einer Ausgabeeinrichtung herauskommt;
b) Bewegen des ringförmigen Lagers (3), so dass der Ablageweg mit der Längserstreckungslinie des streifenähnlichen Elements (5) in Übereinstimmung gebracht wird während die Kontaktposition zwischen dem ringförmigen Lager (3) und dem streifenähnlichen Elements (5) im Wesentlichen im Raum fixiert beibehalten wird;
c) Drehen des ringförmigen Lagers (3) um einen vorbestimmten Winkelabstand;
d) Wiederholen von Schritten a) bis c).

7. Verfahren nach Anspruch 6, bei dem der vorbestimmte Winkelabstand mit dem Umfangsverteilungsabstand der streifenähnlichen Elemente (5) korreliert ist.

8. Verfahren nach Anspruch 6, bei dem während der Bewegung des ringförmigen Lagers (3) sich das streifenähnliche Element (5) in der Ausgabeeinrichtung (8) vorwärts bewegt, indem es durch die Bewegung selbst des ringförmigen Lagers (3) mitgezogen wird.

9. Verfahren nach Anspruch 1, bei dem das Aufbringen jedes streifenähnlichen Elements (5) als Schritte aufweist:
a) Bereitstellen des streifenähnlichen Elements (5) auf einer Ruheebene gemäß einer im Wesentlichen geraden Linie;
b) in Kontakt Bringen des ringförmigen Lagers (3) mit einem Ende des streifenähnlichen Elements (5);
c) Bewegen des ringförmigen Lagers (3), so dass der Ablageweg mit einer Längserstreckungslinie des streifenähnlichen Elements (5) in Übereinstimmung gebracht wird;
d) Drehen des ringförmigen Lagers (3) um einen vorbestimmten Winkelabstand;
e) Wiederholen von Schritten a) bis d).

10. Verfahren nach Anspruch 9, bei dem der vorbestimmte Winkelabstand mit dem Umfangsverteilungsabstand der streifenähnlichen Elemente (5) korreliert ist.

11. Verfahren nach einem der vorhergehenden Ansprüche, bei dem der vorbestimmte Ablageweg mit den Meridianebenen des ringförmigen Lagers (3) einen Winkel identifiziert, der immer größer als 14° ist.

12. Verfahren nach einem der vorhergehenden Ansprüche, bei dem der vorbestimmte Ablageweg mit den Meridianebenen des ringförmigen Lagers (3) einen Winkel identifiziert, der immer kleiner als 30° ist.

## Revendications

1. Procédé de fabrication d'une structure de renforcement pour pneus de véhicules, comprenant :
- une préparation d'éléments en forme de bande (5), chacun comprenant des éléments filaires longitudinaux disposés parallèlement entre eux et au moins partiellement revêtus d'au moins une couche de matériau élastomère ;
- une application des éléments en forme de bande (5) en relation mutuellement approchée le long de l'extension circonférentielle d'un support toroïdal (3), selon une trajectoire de pose prédéterminée formée sur le support toroïdal lui-même (3), de manière à former au moins une couche de renforcement (2) ayant une extension circonférentielle continue autour d'un axe de rotation géométrique (X-X'), ledit support toroïdal (3) comprenant un taux de courbure dans l'intervalle de 0.2 à 0.8 ;
ladite application de chaque élément en forme de bande (5) comprenant un déplacement du support toroïdal (3) selon un chemin tridimensionnel prédéterminé de manière ce que chacun desdits éléments en forme de bande (5) adhère à la surface externe dudit support toroïdal (3) en suivant une ligne d'extension longitudinale de l'élément en forme de bande (5) qui coïncide avec la trajectoire de pose prédéterminée.

2. Procédé selon la revendication 1, dans lequel un mouvement dudit support toroïdal (3) est commandé pendant une application de chaque élément en forme de bande (5), pour provoquer une application de l'élément en forme de bande lui-même selon une trajectoire loxodromique par rapport à la surface externe du support toroïdal (3).

3. Procédé selon la revendication 1, dans lequel une préparation des éléments en forme de bande (5) est effectuée par des actions de coupe réalisées séquentiellement sur au moins un élément continu en forme de bande (6) incorporant lesdits éléments filaires dans ladite couche de matériau élastomère.

4. Procédé selon la revendication 3, dans lequel chaque action de coupe est suivie d'une application de l'élément individuel en forme de bande (5) ainsi obtenu sur le support toroïdal (3).

5. Procédé selon la revendication 1, dans lequel un mouvement dudit support toroïdal a lieu au moyen d'un bras robotisé (7) de type anthropomorphique.

6. Procédé selon la revendication 1, dans lequel une application de chaque élément en forme de bande met en oeuvre les étapes de :
a) amener ledit support toroïdal (3) en contact avec une première extrémité dudit élément en forme de bande (5) sortant d'un dispositif de fourniture ;
b) déplacer ledit support toroïdal (3) de manière à faire coïncider ladite trajectoire de pose avec ladite ligne d'extension longitudinale de l'élément en forme de bande (5), tout en maintenant sensiblement fixée dans l'espace la position de contact entre le support toroïdal (3) et l'élément en forme de bande (5) ;
c) faire tourner le support toroïdal (3) selon un pas angulaire prédéterminé ;
d) répéter les étapes a) à c).

7. Procédé selon la revendication 6, dans lequel ledit pas angulaire prédéterminé est corrélé avec le pas de distribution circonférentiel des éléments en forme de bande (5).

8. Procédé selon la revendication 6, dans lequel lors d'un mouvement du support toroïdal (3) ledit élément en forme de bande (5) se déplace vers l'avant dans le dispositif de fourniture (8) étant déplacé par le mouvement lui-même du support toroïdal (3).

9. Procédé selon la revendication 1, dans lequel une application de chaque élément en forme de bande (5) met en oeuvre les étapes de :
a) fournir l'élément en forme de bande (5) sur un plan de repos selon une ligne sensiblement droite ;
b) amener ledit support toroïdal (3) en contact avec une extrémité dudit élément en forme de bande (5) ;
c) déplacer ledit support toroïdal (3) de manière à faire coïncider ladite trajectoire de pose avec une ligne d'extension longitudinale de l'élément en forme de bande (5) ;
d) faire tourner le support toroïdal (3) selon un pas angulaire prédéterminé ;
e) répéter les étapes a) à d).

10. Procédé selon la revendication 9, dans lequel ledit pas angulaire prédéterminé est corrélé avec le pas de distribution circonférentiel des éléments en forme de bande (5)

11. Procédé selon l'une quelconque des revendications précédentes, dans lequel ladite trajectoire de pose prédéterminée forme, avec les plans méridiens du support toroïdal (3), un angle toujours supérieur à 14°.

12. Procédé selon l'une quelconque des revendication précédentes, dans lequel ladite trajectoire de pose prédéterminée forme, avec les plans méridiens du support toroïdal (3), un angle toujours inférieur à 30°.
